# EUROPÄISCHE PATENTSCHRIFT

(11) **EP 2 035 221 B1**
(45) Veröffentlichungstag und Bekanntmachung des Hinweises auf die Patenterteilung: **09.09.2009**
(21) Anmeldenummer: 07764667.7
(22) Anmeldetag: 15.06.2007
(51) Int. Cl.: B32B 3/20, G09F 3/02

(54) **SICHERHEITSAUFKLEBER**
SECURITY STICKER
AUTOCOLLANT DE SÉCURITÉ

(30) Priorität: 27.06.2006 CH 10272006
(43) Veröffentlichungstag der Anmeldung: 18.03.2009
(73) Patentinhaber: Schweiger, Joseph, 9497 Triesenberg (LI)
(72) Erfinder: Schweiger, Joseph, 9497 Triesenberg (LI)
(74) Vertreter: Büchel, Kaminski & Partner
(86) Internationale Anmeldenummer: PCT/EP2007/005291
(87) Internationale Veröffentlichungsnummer: WO 2008/000361

(56) Entgegenhaltungen:
- WO-A-02/02319
- DE-U1-202004 003 313
- DE-U1-202004 015 397

## Beschreibung

Die Erfindung bezieht sich auf Sicherheitsaufkleber nach dem Oberbegriff des Anspruches 1.

Zum Sichern von verschlossenen Verpackungen, wie Briefcouverts, Paketen, Postsäcken und Boxen oder anderen Verpackungs-Einrichtungen, die zum Aufnehmen von Dokumenten oder Gegenständen geeignet sind, werden Sicherheitsaufkleber bzw. Produkt-Plomben eingesetzt. Es versteht sich von selbst, dass diese Sicherheitsaufkleber auch zum Versiegeln von Gegenständen, wie etwa Türen oder unbenutzten Kabelanschlüssen, verwendet werden können. Die Aufkleber überspannen eine Trennlinie bzw. einen Zugang zwischen zwei Bereichen, an denen der Aufkleber haftet. Die Haftung ist derart stark, dass der Aufkleber nicht ohne Beeinträchtigung entfernt werden kann.

Bei Trennlinien an Verpackungen müssen die beiden Bereiche der Verpackung zum Freigeben des Zuganges ins Innere der Verpackung voneinander weg bewegt werden. Diese Bewegung ist nur möglich, wenn der Sicherheitsaufkleber durchtrennt, der Sicherheitsaufkleber auf mindestens einer Seite der Trennlinie von der Verpackung gelöst oder mindestens ein Bereich der Verpackung mitsamt dem daran befestigten Sicherheitsaufkleber von der Verpackung abgetrennt wird.

Ob der Inhalt beim Empfänger mit dem Inhalt übereinstimmt, der beim Festsetzen des Sicherheitsaufklebers in der Verpackung war, kann durch den Zustand des Sicherheitsaufklebers bzw. seiner Verbindung zur Verpackung erfasst werden.

Aus dem Patent US 6 447 015 B1 sind ein Klebeband und ein Aufkleber bekannt. Das Klebeband wird zwischen zwei überlappende Bereiche eines Couverts eingeklebt. Der Aufkleber wird mit seiner Unterseite über eine zu sichernde Trennlinie geklebt und umfasst bei der Unterseite ein vor dem Aufkleben nicht sichtbares Sicherheitsmuster. Beim Wegreissen des Aufklebers verbleibt das Sicherheitsmuster zumindest teilweise am Couvert haften. Gegebenenfalls sind auch noch Soll-Risslinien ausgebildet, bei denen der Aufkleber beim Wegnehmen reisst. Wenn nun aber der Aufkleber entlang der Trennlinie, die gesichert werden soll, aufgeschnitten wird, so gelangen die beiden Teile des Aufkleber nach dem Öffnen und Schliessen des Couverts wieder exakt zueinander. Wenn die aneinander anliegenden Bereiche des Couverts miteinander verklebt werden, so ist dem Aufkleber kaum etwas vom Öffnungsschnitt anzusehen. Wenn eine zusätzliche Deckschicht aufgebracht wird, so erscheint der Aufkleber unberührt.

Aus der US 6 149 203 ist ein Sicherheitsaufkleber bekannt, der an der Oberfläche ein Muster mit matten und glänzende Bereichen umfasst. Wenn der Aufkleber durchschnitten und anschliessend mit einem transparenten Kleber überdeckt wird, so verschwindet das Muster. Der Nachteil dieser Lösung besteht darin, dass ohne das Aufkleben eines transparenten Klebers, also wenn lediglich der aufgeschnittene Sicherheitsaufkleber bei der Schnittlinie exakt zusammengefügt wird, zumindest der oberflächliche Eindruck eines intakten Sicherheitsklebers entsteht. Wenn die aneinander anliegenden Bereiche des Couverts nach dem unerlaubten Öffnen miteinander verklebt werden, so bleibt das Couvert verschlossen und der Sicherheitskleber in der scheinbar intakten Kontaktlage.

Der Erfindung liegt nun die Aufgabe zugrunde, eine einfache Lösung zu finden, mit der das Aufschneiden und anschliessende Zusammenfügen zu einem scheinbar intakten Sicherheitsaufkleber verhindert werden kann.

Diese Aufgabe wird durch die Merkmale des Anspruches 1 gelöst. Die abhängigen Ansprüche beschreiben alternative bzw. vorteilhafte Ausführungsvarianten.

Bei der Lösung der Aufgabe wurde erkannt, dass das Schneiden des Sicherheitsaufklebers nebst dem Schnitt eine weitere irreversible Veränderung bewirken soll. Ein erfindungsgemässer Sicherheitsaufkleber ist als Schichtmaterial aufgebaut und umfasst zumindest eine Haftschicht, eine Trägerschicht, eine Deckschicht und eine Verbindungsschicht zwischen der Deckschicht und der Trägerschicht. Die Verbindungsschicht weist mindestens einen Freiraum auf, bei dem der Bereich zwischen der Deckschicht und der Trägerschicht frei von klebenden Verbindungen ist, wobei rund um den mindestens einen Freiraum eine durchgehende klebende Verbindung besteht. Beim intakten Sicherheitsaufkleber ist der Freiraum im Wesentlichen frei von Gas und die Deckschicht liegt direkt an der darunter liegenden Schicht an. Bei einem beschädigten Sicherheitsaufkleber mit einer Verbindung von aussen zum mindestens einen Freiraum weist der Freiraum Gas auf und ein erkennbarer Losezustand der Deckschicht ist im Bereich des Freiraums ausgebildet.

Der Freiraum ist beim intakten Sicherheitsaufkleber im Wesentlichen als Vakuumkammer ausgebildet. Die Haftkräfte zwischen der Deckschicht und der darunter anschliessenden Schicht sind im Wesentlichen verschwindend klein, so dass bei einer Verbindung von aussen zum Freiraum Gas bzw. Luft in den Freiraum eindringt und einen erkennbaren Losezustand erzeugt. Gegebenenfalls sind zwischen der Deckschicht und der darunter anschliessenden Schicht sogar abstossende Kräfte vorgesehen, so dass das Eintreten von Luft erleichtert wird.

Das Erkennen eines Losezustandes kann optisch erfolgen. Gegebenenfalls muss mit einer auf die Deckschicht aufgebrachten Reibungskraft kontrolliert werden, ob die Deckschicht aufgrund eines zerstörten Vakuums relativ zur Trägerschicht bewegbar ist. Der erfinderische Sicherheitsaufkleber verhindert ein unerkanntes Aufschneiden und anschliessendes Zusammenfügen mit einem einfachen Aufbau.

Wenn die Deckschicht transparent ist kann die optische Kontrolle des Losezustandes verbessert werden. Zudem wird auch die Kontrolle des Zustandes mindestens eines direkt unter der Deckschicht angeordneten band- oder fadenförmigen Sicherheitselements ermöglicht. In einer bevorzugten Ausführungsform umfasst der Sicherheitsaufkleber mindestens ein band- oder fadenförmiges Sicherheitselement, das sich in einer Richtung über den gesamten Sicherheitsaufkleber erstreckt. Am Rand des Sicherheitsaufklebers ist das mindestens eine Sicherheitselement an der klebenden Verbindung festgesetzt. Das Sicherheitselement verläuft zumindest teilweise durch den Freiraum.

Beim Durchschneiden des Sicherheitsaufklebers quer zur Ausrichtung des Sicherheitselementes wird das Vakuum im Freiraum zerstört und das Sicherheitselement durchtrennt. Das Sicherheitselement kann sich nun im Freiraum etwas bewegen. Bei der Bewegung werden die Bereiche des Sicherheitselementes beidseits des Schnittes etwas voneinander getrennt, was einfach als Anzeige der Zerstörung des Sicherheitsaufklebers erkannt werden kann.

Damit sich die Bereiche des Sicherheitselementes beim Schnitt sicher auseinander bewegen, ist es vorteilhaft, wenn das Sicherheitselement elastisch ist und beim intakten Sicherheitsaufkleber im Bereich des mindestens einen Freiraums unter Spannung steht, so dass bei einem durchschnittenen Sicherheitselement an der Schnittstelle ein Abstand ausgebildet ist. Es versteht sich von selbst dass auch Sicherheitselemente mit erhöhter Schneidfestigkeit, beispielsweise aus metallischem Material, eingesetzt werden können. Weil das Durchschneiden metallischer Sicherheitselemente erschwert ist, werden sie beim Schneiden meist etwas verschoben, was das Erkennen der Zerstörung erleichtert.

Ein erfindungsgemässer Sicherheitsaufkleber kann zusätzlich bekannte Sicherheitsmassnahmen umfassen. Es wird beispielsweise mindestens eine Schicht mit einer Sicherheitsstanzung versehen, vorzugsweise die Deckschicht, gegebenenfalls aber auch die Trägerschicht. Die Haftung des Sicherheitsaufklebers an der Verpackung ist höher als die für das Reissen bei der Sicherheitsstanzung benötigte Kraft. Dadurch kann verhindert werden, dass ein Sicherheitsaufkleber als ganzer Kleber abnehmbar ist.

Zwischen der Haftschicht und der Trägerschicht kann eine aus dem Stande der Technik bekannte Voidschicht angeordnet werden; diese führt bei einer versuchten Abnahme des Sicherheitsaufklebers zu einer sofort erkennbaren Verfärbung.

Für die Haftschicht wird vorzugsweise ein UV-härtender Leim verwendet. Der Leim wird vorzugsweise so gewählt, dass der Sicherheitsaufkleber nicht mittels Wärme, Kälte oder einem Lösungsmittel gelöst werden kann, bzw. dass das Durchführen von Lösungsversuchen mit diesen Hilfsmitteln, zu einer erkennbaren Veränderung der Verpackung bzw. des Sicherheitsaufklebers führt. Ein bevorzugter Leim ist im Temperaturbereich von -60°C bis +60°C zumindest während 2 Jahren beständig.

Um zu verhindern, dass ein abgenommener Sicherheitsaufkleber nach dem Öffnen der Verpackung durch einen gefälschten Sicherheitskleber ersetzt werden kann, kann der Sicherheitsaufkleber fälschungssichere Drucke und/oder Hologramme umfassen. Beispielsweise wird etwa auf der der Haftschicht zugewandten Seite der Trägerschicht ein Guillochendruck angebracht, vorzugsweise mit zwei Farben. Auf der Oberseite der Trägerschicht wird etwa nach einem ersten Druck, vorzugsweise einem 4-Farben-Druck, auch noch ein Digitaldruck, beispielsweise eine fortlaufende Nummer oder ein Barcode aufgedruckt.

Druckschichten und insbesondere auch die Voidschicht sowie die Haftschicht können direkt oder im Flexo-Auftragsverfahren von Transferschichten nacheinander auf die Trägerschicht, bzw. die bereits daran angeordneten Schichten, aufgebracht werden. Die Haftschicht kann beispielsweise mit einem Düsenleimwerk auf eine Schutzschicht aufgetragen und mitsamt der Schutzschicht aufgebracht werden. Bei einem UV-härtenden Leim wird die Verbindung der Haftschicht mit der gegen die Trägerschicht hin anschliessenden Schicht mittels UV-Licht erzielt. Die Schutzschicht wird bei der Verwendung eines Sicherheitsaufkleber entfernt. Die Verbindungsschicht ist keine durchgehende Schicht, sondern weist bei den Freiräumen Bereiche ohne Leim auf. Gegebenfalls wird auch die Verbindungsschicht im Flexo-Beschichtungsfahren von einer Transferschicht aufgebracht, vorzugsweise aber wird sie mit Düsen direkt aufgebracht.

Wenn Sicherheitselemente in der Form von Sicherheitsfäden eingesetzt werden, so müssen diese Fäden auf die Verbindungsschicht gebracht werden. Die Verbindungsschicht kann dabei auf der Trägerschicht oder auf der Deckschicht aufgebracht sein. Wenn sie auf der Trägerschicht ist, werden die Fäden anschliessend mit der Deckschicht abgedeckt. Wenn die Verbindungsschicht an der Deckschicht haftet, wird die Deckschicht mit der Verbindungsschicht und den Fäden auf die Trägerschicht aufgebracht.

Das Schichtmaterial kann auf der Trägerschicht aufgebaut werden, oder der Aufbau kann teilweise auf der Trägerschicht und teilweise auf der Deckschicht erfolgen. Eine Sicherheitsstanzung wird entsprechend entweder am gesamten Schichtmaterial oder vor dem Zusammenbringen von Teilaufbauten je an diesen Teilaufbauten ausgebildet. Ein Verfahren mit Teilaufbauten wird bevorzugt, weil dann die Sicherheitsstanzung gezielter auf die unterschiedlichen Eigenschaften der Deckschicht und der Trägerschicht ausgerichtet werden kann. Insbesondere kann die Deckschicht zum Schutz der Sicherheitselemente ohne diese mit der Sicherheitsstanzung versehen werden.

Bei einem bevorzugten Herstellungsverfahren werden drei Bahnen zusammengeführt, nämlich die Deckschicht mit aufgebrachten Schichten bzw. Elementen, die Trägerschicht mit aufgebrachten Schichten und die abnehmbare Schutzschicht.

Das vollständig aufgebaute Schichtmaterial für Sicherheitsaufkleber umfasst vorzugsweise mehrere parallele Reihen von Sicherheitsaufklebern. Zum Bereitstellen von einzelnen Sicherheitsaufklebern werden Bahnen mit Einzelreihen geschnitten. Von diesen Bahnen müssen dann die einzelnen Sicherheitsaufkleber abgetrennt werden. Gegebenenfalls werden direkt Einzelaufkleber aus dem Schichtmaterial herausgestanzt. Die Form des Sicherheitsaufklebers kann beliebig gewählt werden, wobei sich das Schichtmaterial innerhalb einer äusseren Randlinie erstreckt. Vorzugsweise ist die äussere Randlinie ein Rechteck, gegebenenfalls aber ein Kreis oder eine Ellipse. Die Form entspricht dem jeweiligen Verwendungszweck.

Zum Sichern eines verschlossenen Couverts wird vorzugsweise ein rechteckiger Sicherheitsaufkleber mit Sicherheitselementen so über eine Trennlinie geklebt, dass sich die Sicherheitselemente über die Trennlinie erstrecken.

Das Sichtmaterial des Sicherheitsaufklebers kann auch bereits beim Herstellen einer Verpackung in diese eingesetzt werden. Beim Verschliessen der Verpackung wird von einem noch mit einer Schutzschicht versehenen Bereich des Schichtmaterials die Schutzschicht entfernt und der freie Bereich der Haftschicht an der Verpackung festgeklebt.

Es versteht sich von selbst, dass das Schichtmaterial für verschiedene Versiegelungsaufgaben einsetzbar ist. Wenn beispielsweise ein Anschluss eines kostenpflichtigen Informations-Kabelnetzes nicht benützt wird, kann der erfindungsgemässe Sicherheitsaufkleber, so auf die Dose mit dem Kabelanschluss geklebt werden, dass der Anschluss und gegebenenfalls auch die Schrauben zum Lösen der Dose nicht zugänglich sind. Es ist auch möglich, Türen zu Räumen, die nicht benützt werden dürfen, mit einem sich von der Tür auf den Rahmen erstreckenden Kleber zu versiegeln.

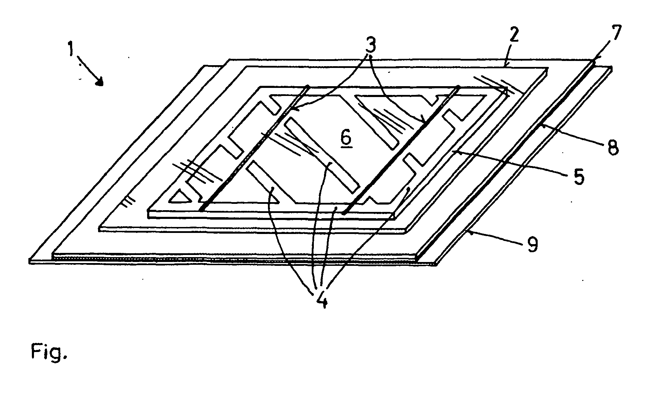

Die Zeichnung erläutert die Erfindung anhand eines Ausführungsbeispieles.

Die Figur zeigt eine perspektivische Ansicht eines Ausschnitts des Schichtmaterials für einen Sicherheitsaufkleber 1, der im Wesentlichen die Ausmasse des innersten Rechteckes aufweist. Um die verschiedenen Lagen besser erkennbar zu machen, sind sie unterschiedlich weit über den eigentlichen Sicherheitsaufkleber 1 hinausragend dargestellt.

Die oberste Schicht ist eine transparente Deckschicht 2. Direkt darunter verlaufen zwei Sicherheitselemente 3 in der Form von vorgespannten elastischen Fäden parallel zu einer Rechtecksseite des Sicherheitsaufklebers 1. Die beiden Sicherheitselemente 3 werden vom Leim einer Verbindungsschicht 4 gehalten.

Der Leim der Verbindungsschicht 4 erstreckt sich rahmenförmig entlang der äusseren Berandung eines Abschnittes einer Trägerschicht 5. Innerhalb dieses Rahmens mit Leim der Verbindungsschicht 4 ist zwischen der Trägerschicht 5 und der Deckschicht 2 ein Freiraum 6 ohne Leim ausgebildet. Damit die Verbindung zwischen der Trägerschicht 5 und der Deckschicht 2 genügend stark ist, umfasst die Verbindungsschicht vorzugsweise auch innerhalb des Rahmens Teilbereiche mit Leim. Es versteht sich von selbst, dass der Leimauftrag der Verbindungsschicht auch so gewählt werden kann, dass zwei oder mehr voneinander abgetrennte Freiräume 6 entstehen.

Die Trägerschicht 5 ist auf der der Deckschicht 2 zugewandten Seite bedruckt und umfasst beispielsweise für jeden einzelnen Sicherheitsaufkleber 1 eine fortlaufende Nummerierung.

Auf der von der Deckschicht 2 abgewandten Seite der Trägerschicht 5 ist im vorliegenden Beispiel eine Voidschicht 7 angeordnet. Voidschichten sind aus dem Stande der Technik bekannt und führen unter Zugkräften beim versuchten Entfernen des Klebers zu erkennbaren Verfärbungen.

Anschliessend die von der Trägerschicht 5 abgewandten Seite der Voidschicht 7 befindet sich eine Haftschicht 8, mit welcher der Sicherheitsaufkleber 1 an einer Verpackung festgeklebt wird. Die Haftschicht wird vor dem Gebrauch des Sicherheitsklebers 1 durch einer Schutzschicht 9 geschützt.

Die Sicherheitselemente 3 sind band- oder fadenförmig und erstrecken sich wenigstens in einer Richtung über den gesamten Sicherheitsaufkleber. Sie können aber auch anders angeordnet sein, beispielsweise sich kreuzend, schräg oder diagonal zu den Seitenkanten des Sicherheitsaufklebers. Sie sind am Rand mit dem Leim der Verbindungsschicht 4 festgesetzt und verlaufen zumindest teilweise durch den mindestens einen Freiraum 6. Es versteht sich von selbst, dass auch lediglich ein Sicherheitselement 3 eingesetzt werden kann.

Wenn der Sicherheitsaufkleber 1 das Durchschneiden in zwei zueinander orthogonalen Richtungen durch die Zerstörung von Sicherheitselementen 3 anzeigen soll, so werden Sicherheitselemente 3 in zwei orthogonalen Richtungen oder gegebenenfalls diagonal zum Sicherheitsaufkleber 1 angeordnet. Sie erstrecken sich jeweils in einer Richtung über den gesamten Sicherheitsaufklebers 1. In der dargestellten Ausführungsform sind zwei Sicherheitselemente 3 im Wesentlichen parallel ausgerichtet.

## Patentansprüche

1. Sicherheitsaufkleber (1) in der Form von Schichtmaterial, das sich innerhalb einer äusseren Randlinie erstreckt, mit einer Haftschicht (8), einer Trägerschicht (5), einer Deckschicht (2) und einer Verbindungsschicht (4) zwischen der Deckschicht und der Trägerschicht, **dadurch gekennzeichnet, dass** die Verbindungsschicht (4) mindestens einen Freiraum (6) umfasst, bei dem der Bereich zwischen der Deckschicht (2) und der Trägerschicht (5) frei von klebenden Verbindungen ist, wobei rund um den mindestens einen Freiraum (6) eine durchgehende klebende Verbindung besteht, beim intakten Sicherheitsaufkleber (1) der Freiraum (6) im Wesentlichen frei von Gas ist sowie die Deckschicht (2) direkt an der darunter liegenden Schicht anliegt und bei einem beschädigten Sicherheitsaufkleber (1) mit einer Verbindung von aussen zum mindestens einen Freiraum (6) der Freiraum (6) Gas aufweist sowie ein erkennbarer Losezustand der Deckschicht (2) im Bereich des Freiraums (6) ausgebildet ist.

2. Sicherheitsaufkleber (1) nach Anspruch 1, **dadurch gekennzeichnet, dass** die Deckschicht (2) transparent ist.

3. Sicherheitsaufkleber (1) nach Anspruch 1 oder 2, **dadurch gekennzeichnet, dass** sich die durchgehende klebende Verbindung um den mindestens einen Freiraum (6) entlang der äusseren Randlinie des Sicherheitsaufklebers (1) erstreckt.

4. Sicherheitsaufkleber (1) nach einem der Ansprüche 1 bis 3, **dadurch gekennzeichnet, dass** innerhalb des mindestens einen Freiraums (6) Bereiche mit durchgehenden klebenden Verbindung zwischen der Deckschicht (2) und der Trägerschicht (5) ausgebildet sind.

5. Sicherheitsaufkleber (1) nach einem der Ansprüche 2 bis 4, **dadurch gekennzeichnet, dass** sich direkt unter der Deckschicht (2) mindestens ein band- oder fadenförmiges Sicherheitselement (3) in einer Richtung über den gesamten Sicherheitsaufkleber (1) erstreckt, am Rand an der klebenden Verbindung festgesetzt ist und zumindest teilweise durch den mindestens einen Freiraum (6) verläuft.

6. Sicherheitsaufkleber (1) nach Anspruch 5, **dadurch gekennzeichnet, dass** sich mindestens zwei band- oder fadenförmige Sicherheitselemente (3) je in einer Richtung über den gesamten Sicherheitsaufkleber (1) erstrecken.

7. Sicherheitsaufkleber (1) nach Anspruch 6, **dadurch gekennzeichnet, dass** die band- oder fadenförmigen Sicherheitselemente (3) im Wesentlichen parallel ausgerichtet sind.

8. Sicherheitsaufkleber (1) nach einem der Ansprüche 5 bis 7, **dadurch gekennzeichnet, dass** das mindestens eine band- oder fadenförmige Sicherheitselement (3) elastisch ist und beim intakten Sicherheitsaufkleber
(1) im Bereich des mindestens einen Freiraums (6) unter Spannung steht, so dass bei einem durchschnittenen Sicherheitselement (3) an der Schnittstelle ein Abstand ausgebildet ist.

9. Sicherheitsaufkleber (1) nach einem der Ansprüche 1 bis 8, **dadurch gekennzeichnet, dass** an der freien Seite der Haftschicht (8) eine abnehmbare Schutzschicht (9) anliegt.

10. Sicherheitsaufkleber (1) nach einem der Ansprüche 1 bis 9, **dadurch gekennzeichnet, dass** mindestens eine Schicht mit einer Sicherheitsstanzung versehen ist, vorzugsweise die Decksicht (2), gegebenenfalls auch die Trägerschicht (5).

11. Sicherheitsaufkleber (1) nach einem der Ansprüche 1 bis 10, **dadurch gekennzeichnet, dass** zwischen der Haftschicht (8) und der Trägerschicht (5) eine Voidschicht (7) angeordnet ist.

12. Sicherheitsaufkleber (1) nach einem der Ansprüche 1 bis 11, **dadurch gekennzeichnet, dass** die Trägerschicht (5) zumindest auf einer Seite bedruckt ist, vorzugsweise auf der gegen die Deckschicht (2) gerichteten Seite, insbesondere mit einer Druckschicht und einem Digitaldruck, und gegebenenfalls auf der gegen die Haftschicht (8) gerichteten Seite ein Guillochendruck aufgebracht ist.

## Claims

1. Security sticker (1) in the form of layered material which extends within an outer boundary line, comprising an adhesive layer (8), a carrier layer (5), a top layer (2) and a bonding layer (4) between the top layer and the carrier layer,
**characterized in that** the bonding layer (4) comprises at least one free space (6) in which the region between the top layer (2) and the carrier layer (5) is free of adhesive bonds, a continuous adhesive bond existing round the at least one free space (6), the free space (6) being substantially free of gas and the top layer (2) resting directly on the layer underneath in the case of the intact security sticker (1), and the free space (6) having gas and a detectable detachment state of the top layer (2) being formed in the region of the free space (6) in the case of a damaged security sticker (1) with a bond from outside to the at least one free space (6).

2. Security sticker (1) according to Claim 1,
**characterized in that** the top layer (2) is transparent.

3. Security sticker (1) according to Claim 1 or 2, **characterized in that** the continuous adhesive bond extends around the at least one free space (6) along the outer boundary line of the security sticker (1).

4. Security sticker (1) according to any of Claims 1 to 3, **characterized in that** regions having a continuous adhesive bond between the top layer (2) and the carrier layer (5) are formed within the at least one free space (6).

5. Security sticker (1) according to any of Claims 2 to 5, **characterized in that** at least one tape- or filament-like security element (3) extends directly under the top layer (2) in a direction over the total security sticker (1), is fixed at the edge to the adhesive bond and runs at least partly through the at least one free space (6).

6. Security sticker (1) according to Claim 5,
**characterized in that** at least two tape- or filament-like security elements (3) each extend in a direction over the total security sticker (1).

7. Security sticker (1) according to Claim 6,
**characterized in that** the tape- or filament-like security elements (3) are aligned substantially parallel.

8. Security sticker (1) according to any of Claims 5 to 7, **characterized in that** the at least one tape- or filament-like security element (3) is elastic and is under tension in the region of the at least one free space (6) in the intact security sticker (1) so that a spacing is formed at the interface in the case of a security element which has been cut through.

9. Security sticker (1) according to any of Claims 1 to 8, **characterized in that** a removable protective layer (9) rests on the free side of the adhesive layer (8).

10. Security sticker (1) according to any of Claims 1 to 9, **characterized in that** at least one layer is provided with a security stamping, preferably the top layer (2), optionally also the carrier layer (5).

11. Security sticker (1) according to any of Claims 1 to 10, **characterized in that** a void layer (7) is arranged between the adhesive layer (8) and the carrier layer (5).

12. Security sticker (1) according to any of Claims 1 to 11, **characterized in that** the carrier layer (5) is imprinted at least on one side, preferably on the side facing the top layer (2), in particular with a print layer and a digital print, and a guilloche print is optionally applied to the side facing the adhesive layer (8).

## Revendications

1. Autocollant de sécurité (1), se présentant sous la forme d'un matériau en couches, s'étendant à l'intérieur d'une ligne de bordure extérieure, avec une couche adhésive (8), une couche support (5), une couche de couverture (2) et une couche de liaison (4) entre la couche de couverture et la couche support, **caractérisé en ce que** la couche de liaison (4) comprend au moins un espace libre (6), pour lequel la zone entre la couche de couverture (2) et la couche support (5) est exempte de liaisons collantes, sachant que tout autour du au moins un espace libre (6) est constituée une liaison collante continue, dans le cas où l'autocollant de sécurité (1) est intact, l'espace libre (6) est pratiquement exempt de gaz et la couche de couverture (2) est en appui direct sur la couche sous-jacente, et, dans le cas où l'autocollant de sécurité (1) est endommagé, avec une liaison allant de l'extérieur au au moins un espace libre (6), l'espace libre (6) présente du gaz, et un état lâche identifiable de la couche de couverture (2) dans la zone de l'espace libre (6) est réalisé.

2. Autocollant de sécurité (1) selon la revendication 1, **caractérisé en ce que** la couche de couverture (2) est transparente.

3. Autocollant de sécurité (1) selon la revendication 1 ou 2, **caractérisé en ce que** la liaison collante continue s'étend autour du au moins un espace libre (6), le long de la ligne de bordure extérieure de l'autocollant de sécurité (1) .

4. Autocollant de sécurité (1) selon l'une des revendications 1 à 3, **caractérisé en ce qu'**à l'intérieur du au moins un espace libre (6) sont réalisées des zones à liaison collante continue entre la couche de couverture (2) et la couche support (5).

5. Autocollant de sécurité (1) selon l'une des revendications 2 à 4, **caractérisé en ce qu'**au moins un élément de sécurité (3) en forme de bande ou de fil s'étend directement au-dessous de la couche de couverture (2), dans une direction au-dessus de l'ensemble de l'autocollant de sécurité (1), en étant fixé au bord sur la liaison collante et s'étendant au moins partiellement à travers le au moins un espace libre (6).

6. Autocollant de sécurité (1) selon la revendication 5, **caractérisé en ce qu'**au moins deux éléments de sécurité (3) en forme de bande ou de fil s'étendent chacun dans une direction, au-dessus de l'ensemble de l'autocollant de sécurité (1).

7. Autocollant de sécurité (1) selon la revendication 6, **caractérisé en ce que** les éléments de sécurité (3) en forme de bande ou de fil sont orientés sensiblement parallèlement.

8. Autocollant de sécurité (1) selon l'une des revendications 5 à 7, **caractérisé en ce que** le au moins un élément de sécurité (3) en forme de bande ou de fil est élastique et, dans le cas où l'autocollant de sécurité (1) est intact, est placé sous tension mécanique dans la zone du au moins un espace libre (6), de manière qu'un espacement soit formé à l'emplacement de la coupure dans le cas où un élément de sécurité (3) est sectionné.

9. Autocollant de sécurité (1) selon l'une des revendications 1 à 8, **caractérisé en ce qu'**une couche protectrice (9) amovible est en appui sur la face libre de la couche adhésive (8).

10. Autocollant de sécurité (1) selon l'une des revendications 1 à 9, **caractérisé en ce qu'**au moins une couche, de préférence la couche de couverture (2), le cas échant également la couche support (5), est munie d'un estampage de sécurité.

11. Autocollant de sécurité (1) selon l'une des revendications 1 à 10, **caractérisé en ce qu'**une couche vide (7) est disposée entre la couche adhésive (8) et la couche support (5).

12. Autocollant de sécurité (1) selon l'une des revendications 1 à 11, **caractérisé en ce que** la couche support (5) est imprimée au moins sur une face, de préférence sur la face tournée vers la couche de couverture (2), en particulier avec une couche imprimée et une impression numérique et, le cas échéant, une impression guillochée est appliquée sur la face tournée vers la couche adhésive (8).
